# EUROPÄISCHE PATENTSCHRIFT

(11) **EP 3 963 685 B1**
(45) Veröffentlichungstag und Bekanntmachung des Hinweises auf die Patenterteilung: **18.11.2026**
(21) Anmeldenummer: 20724108.4
(22) Anmeldetag: 07.05.2020
(51) Int. Cl.: H02H 7/24, H01C 7/12, H01C 8/04, H02H 9/04, H02H 9/06

(54) **BLITZSCHUTZ-FUNKENSTRECKENANORDNUNG UND VERFAHREN ZUM BETREIBEN EINER BLITZSCHUTZ-FUNKENSTRECKENANORDNUNG**
LIGHTNING PROTECTION SPARK GAP ASSEMBLY AND METHOD FOR OPERATING A LIGHTNING PROTECTION SPARK GAP ASSEMBLY
ENSEMBLE ÉCLATEUR À ÉTINCELLE DE PROTECTION CONTRE LA FOUDRE ET PROCÉDÉ DE FONCTIONNEMENT D'UN ENSEMBLE ÉCLATEUR À ÉTINCELLE DE PROTECTION CONTRE LA FOUDRE

(30) Priorität: 09.05.2019 DE 102019206730; 10.07.2019 DE 102019210236
(43) Veröffentlichungstag der Anmeldung: 09.03.2022
(73) Patentinhaber: DEHN SE, 92318 Neumarkt i.d. OPf. (DE)
(72) Erfinder: EHRHARDT, Arnd, 92318 Neumarkt (DE); BÜHLER, Klaus, 92318 Neumarkt (DE)
(74) Vertreter: Keller Schneider Patentanwaltsgesellschaft mbH
(86) Internationale Anmeldenummer: PCT/EP2020/062652
(87) Internationale Veröffentlichungsnummer: WO 2020/225340

(56) Entgegenhaltungen:
- EP-B1- 0 013 401
- EP-B1- 1 961 096
- EP-B1- 3 972 064
- DE-U1- 202009 018 086
- US-A- 4 710 847
- US-A1- 2009 021 881
- US-A1- 2013 063 845
- US-A1- 2017 236 674

## Beschreibung

Die vorliegende Erfindung betrifft eine Blitzschutz-Funkenstreckenanordnung und ein Verfahren zum Betreiben einer Blitzschutz-Funkenstreckenanordnung.

### Stand der Technik

Die DE 10 2017 126 419 A1 und die DE 10 2017 119 285 A1 offenbaren triggerbare Schmelzsicherungen, welche z.B. als Aktor über einen Brückenzünder verfügen. Die vorliegende Erfindung beschreibt Methoden zur Aktivierung des Brückenzünders bei fehlerhaften Netzfolgeströmen beim Einsatz der Schmelzsicherungen als Schutzvorrichtung für Blitzschutz-Funkenstrecken.

Aus der US 2017/0236674 A1 ist eine Blitzschutz-Funkenstreckenanordnung bekannt, welche aufweist: eine Blitzschutz-Funkenstrecke, welche einen ersten Hauptanschluss und einen zweiten Hauptanschluss aufweist, wobei an den ersten Hauptanschluss eine erste Spannungsleitung eines Versorgungsnetzes und an den zweiten Hauptanschluss eine zweite Spannungsleitung des Versorgungsnetzes anschließbar ist. Weiterhin vorgesehen ist eine triggerbare Schmelzsicherungseinrichtung, welche zwischen die erste oder zweite Spannungsleitung und den entsprechenden Hauptanschluss der Blitzschutz-Funkenstrecke anschließbar ist, wobei im Betrieb zwischen der ersten Spannungsleitung und der zweiten Spannungsleitung mindestens ein über die Blitzschutz-Funkenstrecke führender Strompfad ausbildbar ist. Ferner ist eine Indikatoreinrichtung zum Erfassen eines Verschleißes vorgesehen, welche einen Kontakt umfasst, der durch ein degradierbares Material geschützt ist. Im Falle einer Überlastung der Blitzschutz-Funkenstrecke zündet die Indikatoreinrichtung eine Hilfssicherung, welche wiederum die triggerbare Schmelzsicherungseinrichtung auslöst, um die Blitzschutz-Funkenstreckenanordnung vom Netz trennen zu können.

Die Aktivierung von triggerbaren Schmelzsicherungen erfolgt üblicherweise durch die thermische Überlastung eines Hilfsschmelzleiters, welcher im Allgemeinen zur Aktivierung einer reaktiven Substanz (Sprengstoff, exotherme Masse, Gaserzeugung etc.) genutzt wird. Die Aktivierung wird häufig durch direkte Belastungsgrößen oder auch durch eine unabhängige Signalgabe von außen bzw. auch in Kombination durchgeführt.

Gemäß der DE 1 064 613 wird eine derartige Sicherung beispielsweise durch den eigenen Spannungsabfall infolge einer bestimmten Stromhöhe bzw. eines bestimmten Stromanstieges ausgelöst, indem durch einen spannungsabhängigen Schalter ein Stromfluss über einen Hilfsschmelzleiter zur Zündung eine Sprengmasse, welche den Hauptschmelzleiter zerstört zum Fließen kommt.

Gemäß der DE 1 904 244 wird in einer Trenneinrichtung ein entsprechender Hilfsschmelzleiter zur Zündung einer Sprengladung über einen Übertrager aktiviert, welche in Abhängigkeit der Stromstärke, des Stromanstieges, der Spannung bzw. des Spannungsanstieges etc. angesteuert wird. Die DE 10 2008 047 256 A1 offenbart eine triggerbare Sicherung, welche ebenfalls durch eine Sprengladung betätigbar ist. Neben Aktivierungsmöglichkeiten aus einer elektronischen Steuereinheit, welche unmittelbaren Belastungsgrößen, wie Strombelastung etc., auswertet, besitzt diese Anordnung auch einen Steuereingang für Fremdsignale. Somit können die zu schützenden Einrichtungen nahezu beliebige und spezifische Belastungskriterien selbsttätig detektieren und die Überstromschutzeinrichtung unabhängig von der reinen Strombelastung aktivieren. Somit können auch sekundäre Wirkungen einer Strom- bzw. Spannungsbelastung beispielsweise reduzierte Isolationswerte, Leck- Fehlerströme mit Temperaturerhöhung bzw. Brandgefahr, Störlichtbögen etc. sogar ggf. vor einem Schadenseintritt mit Kurzschlussstrom zur Auslösung herangezogen werden.

Die US 2,305,436 zeigt die Nutzung einer triggerbaren Abtrennvorrichtung in Kombination mit einem Blitzableiter. Bei der Belastung des Ableiters mit Impulsströmen wird der Hilfsschmelzleiter mit umgebender Sprengladung kaum belastet. Nur bei netzfrequenten Strömen wird mit Hilfe einer Frequenzweiche durch die Erwärmung eines Heizdrahtes die Zündung der Treibladung bewirkt. Die US 4,807,082 offenbart eine Aktivierungseinrichtung für eine chemisch triggerbare Sicherung. Die Aktivierungseinrichtung wird durch eine Schutzeinrichtung bei transienten Belastungen passiviert.

In der DE 20 2009 018 086 wird ein Überspannungsableiter mit einer pyrotechnischen Abtrennvorrichtung offenbart, welche insbesondere durch am Überspannungsableiter auftretende unerwünschte Lichtbögen direkt und auch durch übliche Kriterien zur Bewertung des Belastungszustandes eines Überspannungsableiters mittels einer Steuerung und deren Signalgabe aktiviert werden kann.

Eine Blitzschutz-Funkenstrecke, welche das Hartgasprinzip zur Erzeugung eines hohen Druckes zur Folgestromvermeidung bzw. Löschung nutzt, ist aus der DE 10 2005 024 658 B4 bekannt. Als hartgasabgebender Stoff wird beispielsweise POM (Polyoxymethylen) verwendet. Derartige Blitzschutz-Funkenstrecken unterliegen einem Verschleiß bei Lichtbogenbelastungen. Übersteigt der Verschleiß des hartgasabgebenden Stoffes eine gewisse Grenze sinkt das Vermögen zur Löschung des Folgestromes.

Die EP1961096B1 offenbart eine Überspannungsschutzeinrichtung für den Einsatz in Gleichstromnetzen.

### Offenbarung der Erfindung

Die vorliegende Erfindung schafft eine Blitzschutz-Funkenstreckenanordnung nach Anspruch 1 bzw. 23 und ein Verfahren zum Betreiben einer Blitzschutz-Funkenstreckenanordnung nach Anspruch 18.

Bevorzugte Weiterbildungen sind Gegenstand der jeweiligen Unteransprüche.

### Vorteile der Erfindung

Der Kern der Erfindung ist die Überwachung bzw. Bewertung der Reduzierung der Funktionsfähigkeit von Blitzschutz-Funkenstrecken, beispielsweise durch Alterung bzw. Überlastung, zur rechtzeitigen Abtrennung durch Triggern einer Schmelzsicherungseinrichtung.

Bei dem Ansprechen von Blitzschutz- Funkenstrecken durch Blitzeinschlag können nach der Ableitung der Impulsströme von der Netzspannung des Versorgungsnetzes verursachte Netzfolgeströme auftreten. Infolge der hohen Strombegrenzung dieser Ströme durch die Löschkammer bzw. ein Löschgas ist die Amplitude der Netzfolgeströme i.a. deutlich geringer als die Amplitude der Impulsströme. Durch die hohe Strombegrenzung wird zudem die Zeitdauer der Netzfolgeströme ebenfalls auf 1 ms bis wenige ms begrenzt.

Somit liegt die Zeitdauer der Netzfolgeströme bei Normalfunktion der Blitzschutz- Funkenstrecken im Bereich der Zeitdauer von energiereichen Impulsstrombelastungen, und die Höhe ist geringer als die Höhe der Impulsbelastungen. Ebenso ist die spezifische Energie eines Netzfolgestromes kleiner als die spezifische Energie des Impulsstromes, welcher im Betriebsbereich der jeweiligen Blitzschutz- Funkenstrecke liegt.

Übliche Lösungen, welche z.B. auf die Stromhöhe, Stromsteilheit, Spannungshöhe, Spannungssteilheit zur Auslösung eines Brückenzünders abzielen, sind ungeeignet, weil hier bei Überspannungsgeräten nur eine Abstimmung auf die transiente Impulsbelastung gegeben ist, da diese Werte bei Netzfolgestrom alle deutlich geringer sind, als transiente Belastungsgrößen, welche die Geräte mehrfach beherrschen müssen, ohne abgetrennt zu werden. Da auch die Zeitdauer von Netzfolgestrom und Impulsbelastung ähnlich ist, können nur sehr lange Zeitdauern als fehlerhaft betrachtet werden.

Dadurch dass die Indikatoreinrichtung gemäß einem Aspekt der Erfindung eine elektrische oder mechanische Verzögerung aufweist, lässt sich eine räumliche und zeitliche Trennung vom Impulsstrom und Netzfolgestrom erreichen und dennoch eine rasche Triggerung der Schmelzsicherungseinrichtung nach beispielsweise 1 ms bis wenige ms.

Vorteilhafterweise ermöglicht die Erfindung somit eine nahezu verzugsfreie Triggerung bei Fehlerzuständen unabhängig von vorhergehenden eingeprägten Impulsströmen. Die Ansteuerung erfolgt nicht während des Impulsstroms, da sonst die Blitzschutz-Funkenstreckenanordnung überlastet werden könnte und eine Gefährdung durch eine zu rasche Betätigung bestünde.

Die erfindungsgemäße Lösung ist einfach und preisgünstig und schützt die Blitzschutz-Funkenstrecken vor einer Überlastung durch eine elektrische Aktivierung der Abtrennung mit elektrischer oder mechanischer Verzögerung. Die Abtrennung ist sowohl bei einer Gefährdung durch Impulsströme als auch durch Leck- und Netzfolgeströme realisiert.

Bei einmaligen Impulsstrombelastungen oberhalb des Arbeitsbereiches der Blitzschutz-Funkenstrecke erfolgt eine Abtrennung durch das passive Ansprechen (Schmelzen) der triggerbaren Schmelzsicherung bereits infolge der I²t-Belastung des Impulses. Während der Impulsstromdauer wird somit eine Triggerung vermieden. Somit ist die triggerbare Schmelzsicherung ohne Triggerung bereits eine vollfunktionsfähige Sicherung mit passiver Zeit-/ Strom-Kennlinie.

Eine zusätzliche Ansteuerung bei üblichen sekundären Belastungsgrößen der Blitzschutz-Funkenstrecke bzw. dessen Komponenten, wie Temperatur, Spannung, Druck, Leckstrom, Ausdehnung etc. bzw. Änderung dieser Größen ist mit einer separaten mechanischen Auslösung oder einer sonstigen Kopplung einfach möglich.

Dadurch dass die Indikatoreinrichtung gemäß einem weiteren Aspekt der Erfindung mindestens einen hartgasabgebenden Bereich neben einem Lichtbogenbereich aufweist, in dem eine Sondeneinrichtung als Indikatoreinrichtung vorgesehen ist, ist ein Triggern der Schmelzsicherungseinrichtung ermöglicht, wenn der hartgasabgebende Bereich derart degradiert ist, dass die Sondeneinrichtung vom Lichtbogen elektrisch kontaktierbar ist. Somit findet bei diesem weiteren Aspekt eine direkte Auslösung durch den Lichtbogen bei Alterung durch die Sondeneinrichtung als Indikatoreinrichtung statt, wobei die Verzögerung elektrisch durch einen Widerstand einstellbar ist.

Gemäß einer bevorzugten Ausführungsform weist die Blitzschutz-Funkenstreckenanordnung einen Triggeranschluss auf, wobei der mindestens eine Strompfad einen Triggerstrompfad umfasst, der über den Triggeranschluss führt.

Gemäß einer weiteren bevorzugten Ausführungsform umfasst die Indikatoreinrichtung eine erste Indikatoreinrichtung zum Erfassen eines Stromverlaufs im Triggerstrompfad oder eines entsprechenden Anteils des Stromverlaufs im Triggerstrompfad und zum verzögerten Triggern der Schmelzsicherungseinrichtung über die mechanische Schaltereinrichtung, wenn der erfasste Stromverlauf im Triggerstrompfad oder der entsprechende Anteil des Stromverlaufs im Triggerstrompfad ein vorgegebenes erstes Kriterium erfüllt. So lässt sich eine Alterung der Blitzschutz-Funkenstrecke über den Triggerstrompfad erkennen.

Gemäß einer weiteren bevorzugten Ausführungsform umfasst der mindestens eine Strompfad einen Hauptstrompfad, der über den ersten Hauptanschluss und den zweiten Hauptanschluss führt.

Gemäß einer weiteren bevorzugten Ausführungsform umfasst die Indikatoreinrichtung eine zweite Indikatoreinrichtung zum Erfassen eines Stromverlaufs im Hauptstrompfad oder eines entsprechenden Anteils des Stromverlaufs im Hauptstrompfad und zum verzögerten Triggern der Schmelzsicherungseinrichtung über die mechanische Schaltereinrichtung, wenn der erfasste Stromverlauf im Hauptstrompfad oder der entsprechende Anteil des Stromverlaufs im Hauptstrompfad ein vorgegebenes zweites Kriterium erfüllt. So lassen sich Fehlerzustände über den Hauptstrompfad erkennen.

Gemäß einer weiteren bevorzugten Ausführungsform weist die Indikatoreinrichtung eine Indikatorsicherung auf, durch welche ein mechanisches Stellglied betätigbar ist, wobei die Schaltereinrichtung durch das mechanische Stellglied zum Triggern der Schmelzsicherungseinrichtung schließbar ist. So lässt sich die mechanische Verzögerung über das Stellglied einrichten.

Gemäß einer weiteren bevorzugten Ausführungsform ist eine frequenzabhängige Stromweiche parallel zur Indikatorsicherung geschaltet oder ist ein Teil derselben. So lassen sich bei entsprechender Impedanzabstimmung Impulsströme von Netzfolgeströmen entkoppeln.

Gemäß einer weiteren bevorzugten Ausführungsform ist eine weitere Indikatorsicherung parallel zur Indikatorsicherung geschaltet ist. So lassen sich ebenfalls bei entsprechender Impedanzabstimmung Impulsströme von Netzfolgeströmen entkoppeln.

Gemäß einer weiteren bevorzugten Ausführungsform gehen die Stromhöhe und die Stromdauer des Stromverlaufs oder des entsprechenden Anteils des Stromverlaufs in das vorbestimmte Kriterium ein, wobei insbesondere die Stromhöhe quadratisch und die Stromdauer linear in das vorgegebene Kriterium bzw. das erste und/oder zweite vorgegebene Kriterium eingehen.

Erfindungsgemäß ist das Triggern der Schmelzsicherungseinrichtung um eine vorgegebene Zeitspanne verzögert, welche derart gewählt ist, dass ein Impulsstrom im Wesentlichen abgeklungen ist, bevor die Schmelzsicherungseinrichtung getriggert wird.

Gemäß einer weiteren bevorzugten Ausführungsform liegt die vorgegebene Zeitspanne im Bereich 1 ms bis 5 ms.

Gemäß einer weiteren bevorzugten Ausführungsform ist die Schaltereinrichtung zum Triggern der Schmelzsicherungseinrichtung durch eine Indikatoreinrichtung für einen sekundären Parameter der Blitzschutz-Funkenstrecke, insbesondere Lichteigenschaften, z.B. Intensität oder spektrale Eigenschaften, des Lichtbogens, Temperatur, Druck oder Ausdehnung, schließbar. So lassen sich weitere Aktivierungskriterien heranziehen, um die Sicherheit zu erhöhen.

Gemäß einer weiteren bevorzugten Ausführungsform weist die Blitzschutz-Funkenstrecke mindestens einen hartgasabgebenden Bereich neben einem Lichtbogenbereich auf, in dem eine Sondeneinrichtung als weitere Indikatoreinrichtung vorgesehen ist, durch die ein Triggern der Schmelzsicherungseinrichtung ermöglicht ist, wenn der hartgasabgebende Bereich derart degradiert ist, dass die Sondeneinrichtung vom Lichtbogen elektrisch kontaktierbar ist. So lassen sich Fehlerzustände über den Abbrand des hartgasabgebenden Stoffes erkennen.

Gemäß einer weiteren bevorzugten Ausführungsform weist die Sondeneinrichtung einen ersten Kontakt und einen zweiten Kontakt, welcher vom ersten Kontakt beabstandet angeordnet ist.

Gemäß einer weiteren bevorzugten Ausführungsform ist zwischen dem ersten Kontakt und dem zweiten Kontakt ein Schmelzdraht vorgesehen.

Gemäß einer weiteren bevorzugten Ausführungsform weist die Sondeneinrichtung einen einzelnen Kontakt auf.

Gemäß einer weiteren bevorzugten Ausführungsform ist die Schmelzsicherungseinrichtung derart mit der Sondeneinrichtung verschaltet ist, dass sie durch eine vom Lichtbogen an der Sondeneinrichtung abgegriffenen Spannung unmittelbar aktivierbar ist.

Erfindungsgemäß weist die Schmelzsicherungseinrichtung einen Brückenzünder auf, durch den sie triggerbar ist.

Gemäß einer weiteren bevorzugten Ausführungsform weist die Indikatoreinrichtung eine Indikatorsicherung auf, durch die der Triggerstrompfad von einer der ersten oder zweiten Spannungsleitung abkoppelbar ist, wobei ein elektrisch verzögernder Bypass von der anderen der ersten oder zweiten Spannungsleitung über die triggerbare Schmelzsicherungseinrichtung geschaltet ist, so dass die Schmelzsicherungseinrichtung im abgekoppelten Zustand triggerbar ist.

### Kurze Beschreibung der Zeichnungen

Es zeigen:
- Fig. 1: ein Schaltungsdiagramm zur Erläuterung einer Blitzschutz-Funkenstreckenanordnung gemäß einer ersten Ausführungsform der vorliegenden Erfindung;
- Fig. 2: ein Schaltungsdiagramm zur Erläuterung einer Blitzschutz-Funkenstreckenanordnung gemäß einer zweiten Ausführungsform der vorliegenden Erfindung;
- Fig. 3: ein Schaltungsdiagramm zur Erläuterung einer Blitzschutz-Funkenstreckenanordnung gemäß einer dritten Ausführungsform der vorliegenden Erfindung;
- Fig. 4: ein Schaltungsdiagramm zur Erläuterung einer Blitzschutz-Funkenstreckenanordnung gemäß einer vierten Ausführungsform der vorliegenden Erfindung;

Der Brückenzünder 7 ist einerseits mit dem ersten Hauptanschluss 1a verbunden und andererseits über einen Strombegrenzungswiderstand 12 und eine steuerbare Schaltereinrichtung 11 mit der zweiten Spannungsleitung S2 verbindbar.

Die Triggerschaltung 2 weist einen ersten Anschluss 2a, einen zweiten Anschluss 2b und einen dritten Anschluss 2c auf. Der erste Anschluss 2a ist mit dem ersten Hauptanschluss 1a verbunden, der zweite Anschluss 2b ist über eine Indikatoreinrichtung I mit der zweiten Spannungsleitung S2 verbunden, und der dritte Anschluss 2c ist mit dem Triggeranschluss 1c der Blitzschutz-Funkenstrecke 1 verbunden.

Die Triggerschaltung 2 umfasst einen ersten Strombegrenzer V1, z.B. einen ersten Varistor, der über ein spannungsschaltendes Bauteil 9, z.B. eine Funkenstrecke mit niedrigerer Ansprechspannung als der Blitzschutz-Funkenstrecke 1, und eine Primärwicklung 3a eines Übertragers 3 mit der Indikatoreinrichtung I verbunden ist. Die Triggerschaltung 2 umfasst einen zweiten Strombegrenzer V2, z.B. einen zweiten Varistor, der einerseits mit dem dritten Anschluss 2c und somit mit dem Triggeranschluss 1c verbunden ist. Andererseits ist der zweite Strombegrenzer über die Sekundärwicklung 3b des Übertragers 3 mit dem zweiten Anschluss 2b und somit mit der Indikatoreinrichtung I verbunden.

Bei einer anderen (nicht dargestellten) Ausführungsform kann die Triggerschaltung 2 auch als Stromtriggerung ohne Übertrager 3 ausgeführt sein.

Die Belastung der Triggerschaltung 2 ist mit der Leistungsfähigkeit der Blitzschutz-Funkenstrecke 1 derart abgestimmt, das bei zu hohen Impulsbelastungen bzw. zu hohen Steilheiten des Impulses sowie bei zu langen Zündverzugszeiten der Blitzschutz-Funkenstrecke 1 eine zu hohe bzw. zu lange Strombelastung in der Triggerschaltung 2 auftritt. Die Strombelastung steigt auch bei Fehlern an Bauteilen der Triggerschaltung 2 an, so dass eine Überlastung der Indikatoreinrichtung I herbeigeführt werden kann.

Die Indikatoreinrichtung I beinhaltet eine erste Schmelzsicherung 4 hoher Stromtragfähigkeit und eine zweite Schmelzsicherung 10 geringer Stromtragfähigkeit, auch als Indikatorsicherung bezeichnet, welche zur ersten Schmelzsicherung 4 parallelgeschaltet ist. Beide Schmelzsicherungen 4, 10 können auch in einem einzigen Bauteil integriert sein.

Bei einer Überlastung der Triggerschaltung 2 mit einem zu hohen Strom, einer zu langen Stromflussdauer bzw. auch einer zu starken Erwärmung der Bauteile spricht die Indikatoreinrichtung I an. Die erste Schmelzsicherung 4 kann zudem durch häufige Impulse und Belastungen, insbesondere bei einem Schmelzleiter oder dessen Befestigung mit Niedertemperaturlot, altern, so dass auch ein Ansprechen entsprechend eines Verschleißzustandes der Triggerschaltung 2 und der Blitzschutz-Funkenstrecke 1 möglich ist.

Bei dem Ansprechen der Indikatoreinrichtung I erfolgt die Unterbrechung des Triggerpfades gegenüber der treibenden Spannung des Netzes, wobei zunächst die erste Schmelzsicherung 4 und dann die zweite Schmelzsicherung 10 als Indikatorsicherung ausgelöst wird.

Die zweite Schmelzsicherung 10 besitzt hierbei die Betätigungskraft für ein Stellglied S, beispielsweise eine Kurzhubtaste, der Schaltereinrichtung 11, welcher den Brückenzünder 7 auslöst, wodurch die Anforderungen zur Isolation an den Brückenzünder 7 in der triggerbaren Schmelzsicherungseinrichtung 8 reduziert werden können.

Durch die Auswahl der Schaltereinrichtung 11 und der zweiten Schmelzsicherungseinrichtung 10, u.a. bzgl. Hubweg, Kraft und Masse, kann die Verzugszeit zwischen der Auslösung der ersten Schmelzsicherung 4 und dem Stromfluss durch den Hilfsschmelzleiter des Brückenzünders 7 in einem weiten Bereich eingestellt werden. Der Stromfluss über die Schaltereinrichtung 11 und den Brückenzünder 7 bedarf keiner nennenswerten Steuerung und wird zwingend nicht zur Regelung der Verzugszeit herangezogen. Die mechanische Verzugszeit wird bevorzugt so eingestellt, dass ein Stromfluss über den Brückenzünder mindestens 1 ms gegenüber dem Auslösen des Indikatoreinrichtung I verzögert wird.

Funktionell erfolgt also eine Bewertung bzw. Erfassung des über den Anschluss 2a und insbesondere auch über den Triggeranschluss 2c fließenden Stromes durch die Indikatoreinrichtung I, welche derart gestaltet ist, dass sie die triggerbare Schmelzsicherungseinrichtung 8 durch Aktivieren des Brückenzünders 7 triggert, wenn der erfasste über den Triggeranschluss 2c fließende Strom oder ein entsprechender Anteils davon ein erstes vorgegebenes Kriterium erfüllt.

Das erste vorbestimmte Kriterium vorzugsweise ein I²t-Kriterium des über den Triggeranschluss 2c fließenden Stromes, in das die Stromhöhe quadratisch und die Stromdauer linear eingehen.

Die genaue Festlegung des ersten vorbestimmten Kriteriums, beispielsweise als I²t-Kriterium, hängt von der jeweiligen Bauart der Blitzschutz-Funkenstrecke 1 und den weiteren Randbedingungen ab und kann im Einzelfall empirisch und/oder theoretisch ermittelt werden.

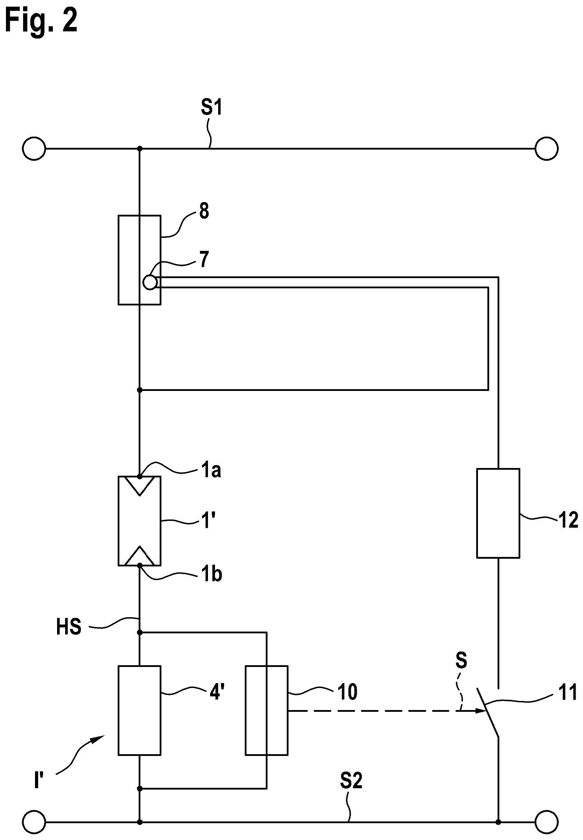

Fig. 2 zeigt ein Schaltungsdiagramm zur Erläuterung einer Blitzschutz-Funkenstreckenanordnung gemäß einer zweiten Ausführungsform der vorliegenden Erfindung.

Bei der zweiten Ausführungsform ist die Blitzschutz-Funkenstrecke 1' ohne Triggeranschluss 1c und ohne Triggerschaltung 2 ausgestaltet.

Die Indikatoreinrichtung I' ist hier in den Hauptstrompfad der Blitzschutz-Funkenstrecke 1' eingegliedert und liegt in Reihe mit der Blitzschutz-Funkenstrecke 1' zwischen dem zweiten Hauptanschluss 1b und der zweiten Spannungsleitung S2. Sie umfasst eine Indikatorsicherung 10, der eine frequenzabhängige Stromweiche 4' parallel oder beispielsweise ein PTC-Widerstand parallel geschaltet ist.

Bei einer direkten Kontaktierung zum Hauptstrompfad ist die Impedanz der frequenzabhängigen Stromweiche 4' mit der Impedanz des Bypasses der Indikatorsicherung 10 abzustimmen. Der Teilstrom über die Indikatorsicherung 10 kann hierbei sehr gering gewählt werden.

Die Indikatoreinrichtung I' wird bei der vorliegenden Ausführungsform genutzt, um eine zu hohe Impulsstrombelastung oder eine zu häufige Impulsstrombelastung bestimmter Höhe zu erkennen.

Die Auslösung der Indikatoreinrichtung I' betätigt hierbei wiederum die Schaltereinrichtung 11 mit der entsprechenden mechanischen Verzögerung von z.B. 1 ms oder mehr. Die Schaltereinrichtung 11 verbindet den Brückenzünder 7 der triggerbaren Schmelzsicherungseinrichtung 8 mit dem Netz über den linearen oder nichtlinearen Widerstand 12 bzw. eine Kapazität, welche einen Stromfluss zur Auslösung des Hilfsschmelzleiters des Brückenzünders 7 bevorzugt zwischen 1 - 10 A jedoch max. 100 A für eine kurze Zeitdauer < 5 ms erlaubt. Der Ansteuerpfad mit Brückenzünder 7, Widerstand 12 und Schaltereinrichtung 11 wird durch die triggerbare Schmelzsicherungseinrichtung 8 nach deren passiver oder aktiver Funktion vom Netz abgetrennt.

Funktionell erfolgt also eine Bewertung bzw. Erfassung des über den Hauptstrompfad fließenden Stromes durch die Indikatoreinrichtung I', welche derart gestaltet ist, dass sie die triggerbare Schmelzsicherungseinrichtung 8 durch Aktivieren des Brückenzünders 7 triggert, wenn der erfasste über den Hauptstrompfad fließenden Strom oder ein entsprechender Anteils davon ein zweites vorgegebenes Kriterium erfüllt.

Das zweite vorbestimmte Kriterium vorzugsweise ebenfalls ein I²t-Kriterium des über den Hauptstrompfad fließenden Stromes, in das die Stromhöhe quadratisch und die Stromdauer linear eingehen.

Die genaue Festlegung des zweiten vorbestimmten Kriteriums, beispielsweise als I²t-Kriterium, hängt von der jeweiligen Bauart der Blitzschutz-Funkenstrecke 1 und den weiteren Randbedingungen ab und kann im Einzelfall empirisch und/oder theoretisch ermittelt werden.

Die Ausführungsform zeigt, dass eine Erfassung von Impulsströmen mit Amplituden bzw. Netzfolgeströmen mit Stromdauern, welche die Blitzschutz-Funkenstrecke 1' schädigen können, sowie die Ansteuerung der triggerbaren Schmelzsicherungseinrichtung 8 mit Brückenzünder 7 mit einer einfachen mechanischen Zeitverzögerung möglich ist.

Alternativ (nicht dargestellt) zu der Strombewertung über die Indikatorsicherung 10 und somit Energie eines Teilstromes ist es auch möglich, unmittelbar die Kräfte auf stromdurchflossene Leiter zur Entriegelung eines Federsystems zu nutzen, welche eine Schaltereinrichtung zeitverzögert betätigen.

Bei einer vorhandenen Energieversorgung bzw. vorhandenen elektronischen Steuer- bzw. Auswerteeinheiten kann die Erfassung bzw. Ansteuerung selbstverständlich auch auf elektronischer Basis mit entsprechender Zeitverzögerung unter Verwendung üblicher Strommessmethoden und Bewertungen erfolgen.

Ansonsten ist die zweite Ausführungsform wie die erste Ausführungsform ausgestaltet.

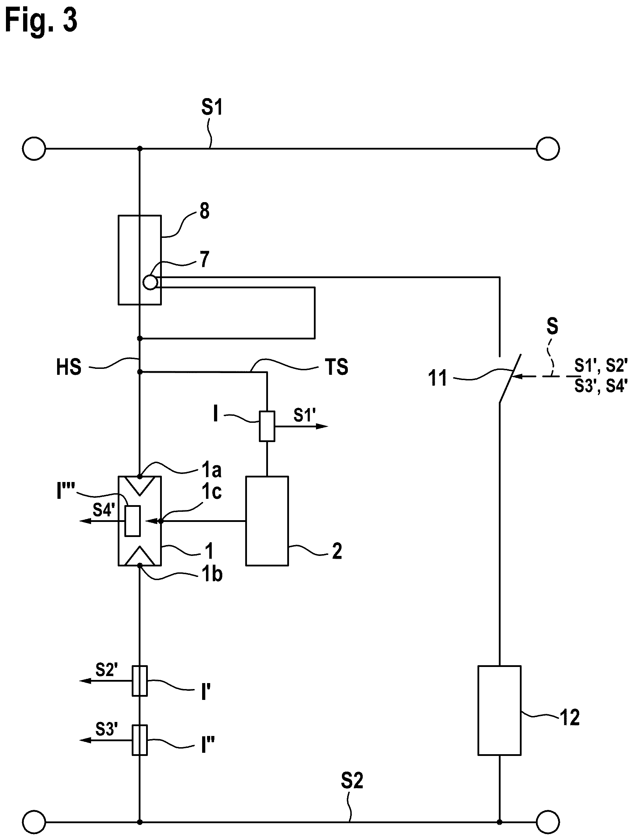

Fig. 3 zeigt ein Schaltungsdiagramm zur Erläuterung einer Blitzschutz-Funkenstreckenanordnung gemäß einer dritten Ausführungsform der vorliegenden Erfindung.

Neben den beiden bisher erläuterten Möglichkeiten zur aktiven Ansteuerung der triggerbaren Schmelzsicherungseinrichtung 8 bei Überlastung im Triggerpfad durch die Indikatoreinrichtung I der ersten Ausführungsform oder bei Überlastung im Hauptstrompfad durch die Indikatoreinrichtung I' der zweiten Ausführungsform, z.B. unter Zugrundelegung eines entsprechenden I²t-Kriterium, können auch bestimmte spezifische Eigenschaften von Blitzschutz-Funkenstrecken zur Ansteuerung zusätzlich herangezogen werden. Diese können beispielsweise auf einem jeweiligen Verhalten der Funkenstrecken bei Folgestrom und Blitzstrom beruhen. Somit kann die Lichtbogenausbildung bzw. auch der Strompfad bei Folgestrom und Impulsstrom unterschiedlich sein und somit einen separaten Einsatz von zusätzlichen Sensoren ermöglichen, welche das Verhalten bzw. Abweichungen vom Normalverhalten erfassen können.

Neben den unmittelbar mit dem Lichtbogen gekoppelten Eigenschaften, wie Strom, Spannung, Druck, Licht etc. können auch die zum Teil verzögerten Wirkungen des Lichtbogens wie Wärme, Materialabrand, Materialveränderungen etc. genutzt werden. Hierdurch ist die Gewinnung eines weiteren Auslösesignals für die Ansteuerung der Schaltereinrichtung 11 aus dem Verhalten der Blitzschutz-Funkenstrecke möglich.

Fig. 3 zeigt dies schematisch für die Blitzschutz-Funkenstrecke 1 der ersten Ausführungsform. Die Ansteuerung des Brückenzünders 7 der triggerbaren Schmelzsicherungseinrichtung 8 erfolgt auch hier über die mechanische Schaltereinrichtung 11 mit mechanischer Verzögerung anhand von Schaltsignalen S1', S2', S3', S4', welche von entsprechenden Indikatoreinrichtungen I, I', I", I‴ herrühren, in einer ODER-Verknüpfung. Mit anderen Worten kann jede der Indikatoreinrichtungen I, I', I", I‴ bei Erfüllen eines entsprechenden vorbestimmten Kriteriums einen Schaltvorgang auslösen und damit den Brückenzünder 7 ansteuern.

Neben den beiden bisher erläuterten Möglichkeiten zur aktiven Ansteuerung der triggerbaren Schmelzsicherungseinrichtung 8 bei Überlastung im Triggerpfad durch die Indikatoreinrichtung I der ersten Ausführungsform durch das Schaltsignal S1' oder bei Überlastung im Hauptstrompfad durch die Indikatoreinrichtung I' der zweiten Ausführungsform durch das Schaltsignal S2' kann ein weiteres Schaltsignal S3' durch eine Temperaturerfassung einer Indikatoreinrichtung I" und noch ein weiteres Schaltsignal S4' durch eine Lichterfassung des Lichtbogens einer Indikatoreinrichtung I‴ zur Betätigung der Schaltereinrichtung 11 herangezogen werden, um den Brückenzünder 7 ansteuern.

Selbstverständlich können das weitere Schaltsignal S3' durch eine Temperaturerfassung der Indikatoreinrichtung I" und das weitere Schaltsignal S4' durch eine Lichterfassung des Lichtbogens der Indikatoreinrichtung I‴ auch bei der ersten Ausführungsform zur Betätigung der Schaltereinrichtung 11 herangezogen werden. Auch weitere (nicht dargestellte) Stromerfassungsmöglichkeiten sind implementierbar, z.B. über einen magnetisch auslösbaren Reedkontakt.

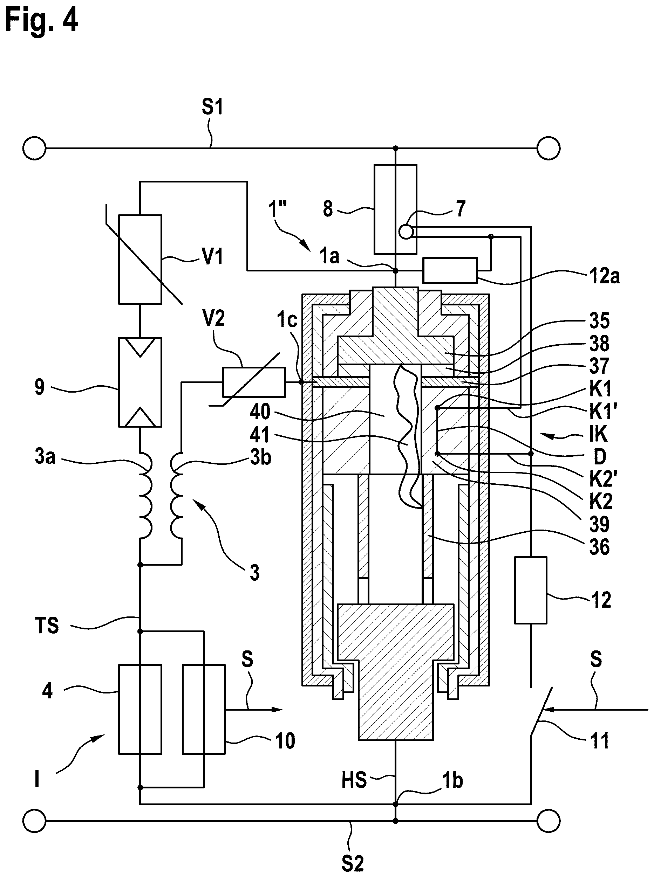

Fig. 4 zeigt ein Schaltungsdiagramm zur Erläuterung einer Blitzschutz-Funkenstreckenanordnung gemäß einer vierten Ausführungsform der vorliegenden Erfindung.

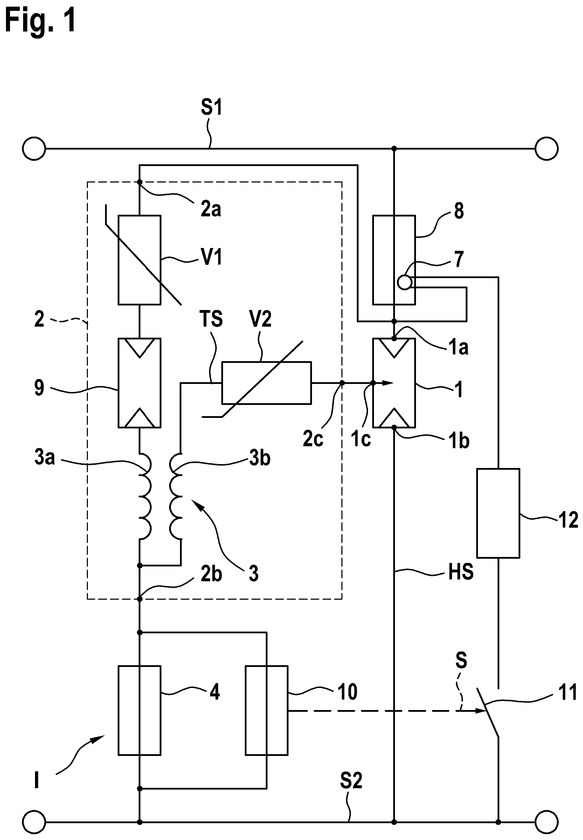

Der Aufbau der Blitzschutz-Funkenstreckenanordnung gemäß Fig. 4 ist analog zum Aufbau der Blitzschutz-Funkenstreckenanordnung gemäß Fig. 1.

Die Blitzschutz-Funkenstrecke 1" der vierten Ausführungsform entspricht vom Prinzip der aus der DE 10 2005 024 658 B4 bekannten Blitzschutz-Funkenstrecke mit Hartgas-Löschung. Die den über den Triggeranschluß 1c fließenden Strom bewertende Indikatoreinrichtung I zur Ansteuerung der Schaltereinrichtung 11 funktioniert ebenfalls, wie im Zusammenhang mit der ersten Ausführungsform beschrieben.

Zusätzlich weist die Blitzschutz-Funkenstrecke 1" eine Sondeneinrichtung K1, K2, D als weitere Indikatoreinrichtung IK auf.

Die Blitzschutz-Funkenstrecke 1" besitzt in mindestens einem Bereich, hier in den Bereichen 38, 39, einen hartgasabgebenden Stoff, welcher bei Belastung mit einem Lichtbogen durch dessen Abbrand altert. In Fig. 4 sind beispielhaft zwei Bereiche 38, 39 mit einem hartgasabgebenden Stoff dargestellt, welche jeweils zwischen einer Hauptelektrode 35, 36 und der Triggerelektrode 37 angeordnet sind.

Die Bereiche 38 und 39 können beispielsweise aus POM (Polyoxymethylen) bestehen. In den Bereich 39 ist beispielsweise ein Draht D oder ein elektrisch leitfähiges Band eingebracht, welches sich in einem festgelegten Abstand zum Lichtbogenbereich 41 der Funkenstreckenkammer 40 innerhalb des Bereichs 39 befindet und in einem Sandwichaufbau des Bereichs 39 umhüllt vom hartgasabgebenden Stoff angeordnet ist.

Der Draht D verbindet hierbei zwei in unterschiedlicher Position bevorzugt vertikal parallel zum Lichtbogenbereich 41 eingeführte Kontakte K1, K2, welche mit dem Brückenzünder 7 der triggerbaren Schmelzsicherungseinrichtung 8 über Anschlussleitungen K1', K2' direkt in Verbindung stehen. Die Bereiche 38, 39 können elektrisch leitfähig ausgestaltet sein. In diesem Fall sind die Anschlussleitungen K1', K2' isoliert vorzusehen.

Bei einem Abbrand des hartgasabgebenden Materials im Bereich 39 durch den Lichtbogen im Lichtbogenbereich 41 bis zum Draht D, wird dieser unterbrochen, wodurch eine Spannungsdifferenz durch die beiden Kontakte K1, K2 am Lichtbogen abgegriffen wird, welche einen Strom zur Aktivierung des Brückenzünders 7 bedingt.

Diese direkte Auslösung des Brückenzünders 7 durch den Lichtbogen wird bei dieser Ausführungsform in Kombination mit der Schaltereinrichtung 11 benutzt, welche alternativ durch die Indikatoreinrichtung I betätigbar ist, wie bereits ausführlich beschreiben. Bei der direkten Auslösung durch den Lichtbogen bestimmt der Widerstand 12a elektrisch die Verzögerung.

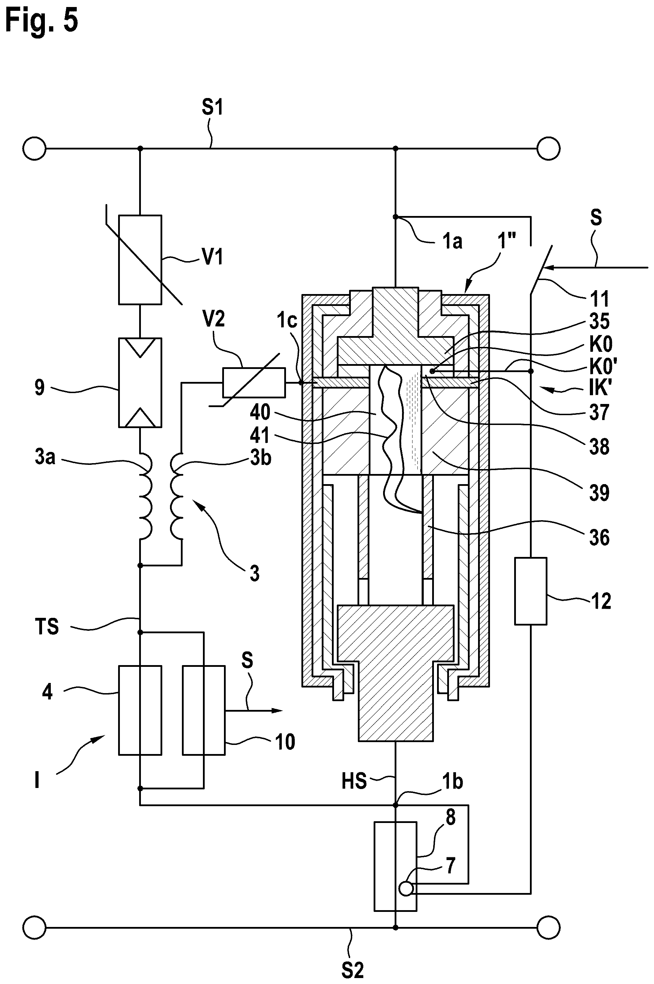

Fig. 5 zeigt ein Schaltungsdiagramm zur Erläuterung einer Blitzschutz-Funkenstreckenanordnung gemäß einer fünften Ausführungsform der vorliegenden Erfindung.

Die Blitzschutz-Funkenstrecke 1" der fünften Ausführungsform entspricht vom Prinzip der aus der DE 10 2005 024 658 B4 bekannten Blitzschutz-Funkenstrecke mit Hartgas-Löschung. Die den über den Triggeranschluß 1c fließenden Strom bewertende Indikatoreinrichtung I zur Ansteuerung der Schaltereinrichtung 11 funktioniert ebenfalls, wie im Zusammenhang mit der ersten Ausführungsform beschrieben.

Der einzige Unterschied besteht darin, dass die triggerbare Schmelzsicherungseinrichtung 8 zwischen den zweiten Hauptanschluss 1b und die zweite Spannungsleitung S2 eingebracht ist und die Schaltereinrichtung 11 mit dem ersten Hauptanschluss 1a verbunden ist.

Zusätzlich weist die Blitzschutz-Funkenstrecke 1" eine Sondeneinrichtung K0 als weitere Indikatoreinrichtung IK' auf.

Gemäß Fig. 5 im Unterschied zur vierten Ausführungsform ist in den Bereich 38 nur ein einziger Kontakt K0 eingebracht, der über die isolierte Anschlussleitung K0' über den Widerstand 12 mit dem Brückenzünder 7 verbunden ist. Wird durch den Materialabbrand des hartgasabgebenden Stoffes im Bereich 38 der Kontakt K0 vom Lichtbogen erreicht, kann die Schaltereinrichtung 11 überbrückt werden, und ein Teilstrom kann von der Hauptelektrode 35 über den Lichtbogen im Lichtbogenbereich 41 und den Kontakt K0 direkt zum Brückenzünder 7 der triggerbaren Schmelzsicherungseinrichtung 8 fließen, um diesen zu aktivieren, wobei der Widerstand 12 den Stromfluss und damit die Auslösezeit beeinflusst.

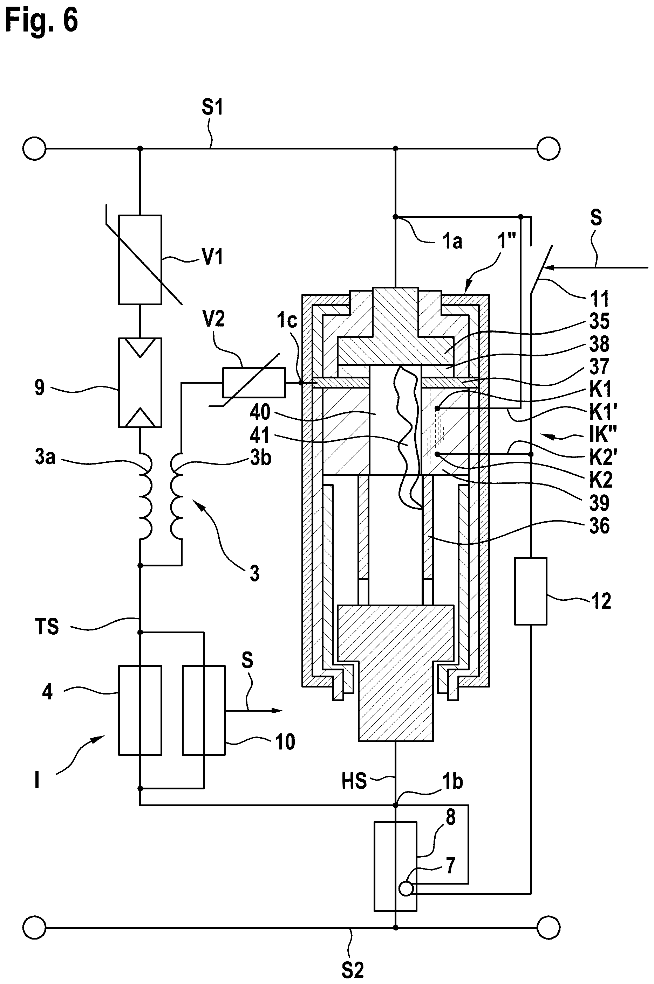

Fig. 6 zeigt ein Schaltungsdiagramm zur Erläuterung einer Blitzschutz-Funkenstreckenanordnung gemäß einer sechsten Ausführungsform der vorliegenden Erfindung.

Die Blitzschutz-Funkenstrecke 1" der sechsten Ausführungsform entspricht vom Prinzip der aus der DE 10 2005 024 658 B4 bekannten Blitzschutz-Funkenstrecke mit Hartgas-Löschung. Die den über den Triggeranschluß 1c fließenden Strom bewertende Indikatoreinrichtung I zur Ansteuerung der Schaltereinrichtung 11 funktioniert ebenfalls, wie im Zusammenhang mit der ersten Ausführungsform beschrieben.

Der einzige Unterschied besteht darin, dass die triggerbare Schmelzsicherungseinrichtung 8 zwischen den zweiten Hauptanschluss 1b und die zweite Spannungsleitung S2 eingebracht ist und die Schaltereinrichtung 11 mit dem ersten Hauptanschluss 1a verbunden ist.

Zusätzlich weist die Blitzschutz-Funkenstrecke 1" eine Sondeneinrichtung K1, K2 als weitere Indikatoreinrichtung IK" auf.

Gemäß Fig. 6 im Unterschied zur vierten Ausführungsform sind in den Bereich 39 nur die zwei Kontakte K1, K2 ohne dazwischenliegenden Draht eingebracht, die über die Anschlussleitungen K1', K2' parallel zur Schaltereinrichtung 11 geschaltet sind. Werden durch den Materialabbrand des hartgasabgebenden Stoffes im Bereich 38 die Kontakte K1, K2 vom Lichtbogen erreicht, kann die Schaltereinrichtung 11 überbrückt werden, und eine Spannungsdifferenz, die durch die beiden Kontakte K1, K2 am Lichtbogen abgegriffen wird, kann einen Strom zur Aktivierung des Brückenzünders 7 bedingen. Die Schaltereinrichtung 11 ist unabhängig von der Alterung betätigbar, wie bereits oben beschrieben.

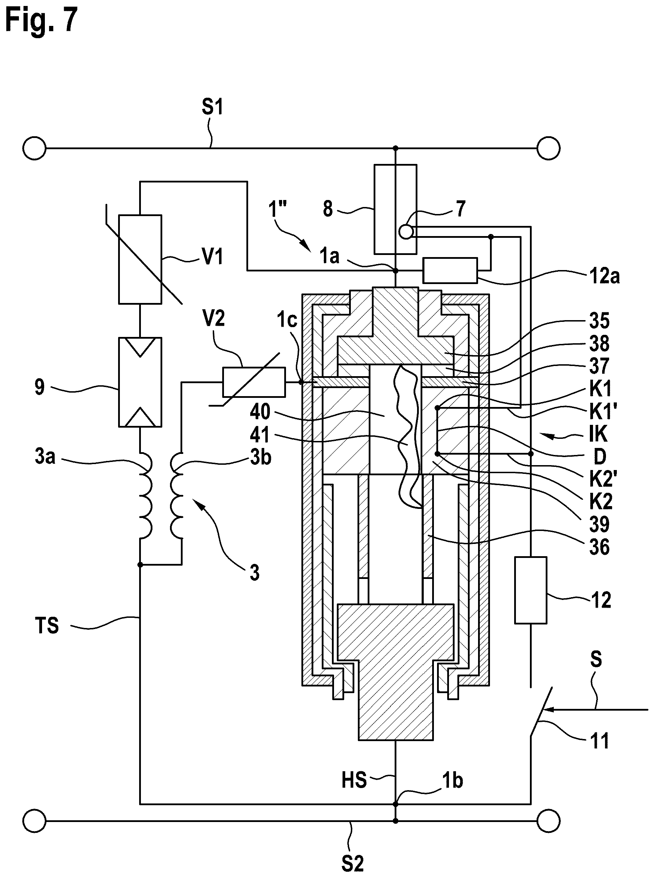

Fig. 7 zeigt ein Schaltungsdiagramm zur Erläuterung einer Blitzschutz-Funkenstreckenanordnung gemäß einer siebenten Ausführungsform der vorliegenden Erfindung.

Die siebente Ausführungsform ist analog zur vierten Ausführungsform aufgebaut, wobei die Indikatoreinrichtung I und die Schaltereinrichtung S weggelassen sind, so dass lediglich eine direkte Auslösung des Brückenzünders 7 durch den Lichtbogen bei Alterung durch die Indikatoreinrichtung IK stattfindet, wobei die Verzögerung elektrisch durch den Widerstand 12 einstellbar ist.

Dabei sei erwähnt, dass auch bei der fünften und sechsten Ausführungsform die Indikatoreinrichtung I und die Schaltereinrichtung S weggelassen werden können, so dass lediglich eine direkte Auslösung des Brückenzünders 7 durch den Lichtbogen bei Alterung durch die Indikatoreinrichtung IK' bzw. IK" stattfindet, wobei die Verzögerung elektrisch durch den Widerstand 12a einstellbar ist.

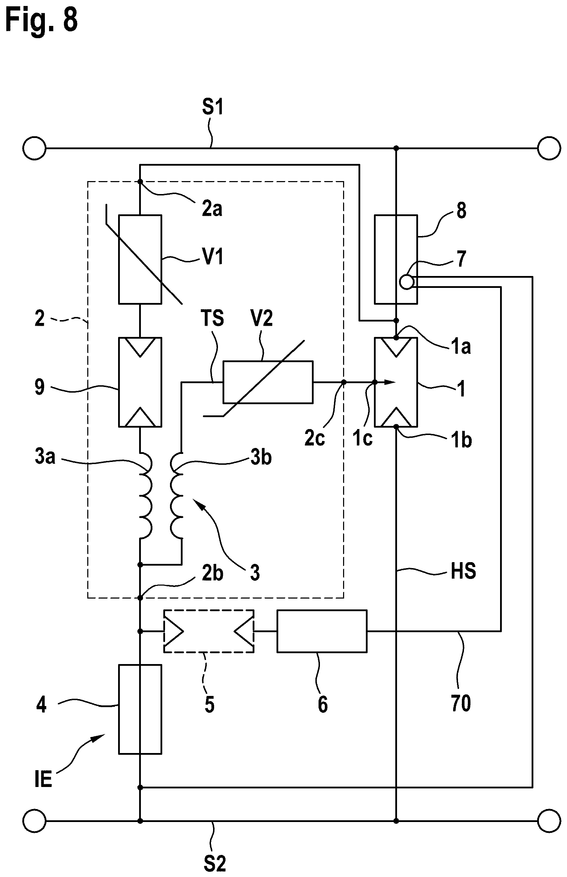

Fig. 8 zeigt ein Schaltungsdiagramm zur Erläuterung einer Blitzschutz-Funkenstreckenanordnung gemäß einer achten Ausführungsform der vorliegenden Erfindung.

Die achte Ausführungsform ist analog zur ersten Ausführungsform aufgebaut, wobei anstelle einer mechanischen Indikatoreinrichtung I bzw. 4, 10 und einer Schaltereinrichtung 11 eine elektrische Indikatoreinrichtung IE vorgesehen ist.

Bei einer Überlastung der Triggerschaltung 2 mit einem zu hohen Strom, einer zu langen Stromflussdauer bzw. auch einer zu starken Erwärmung der Bauteile spricht die Schmelzsicherung 4 an. Die Schmelzsicherung 4 kann zudem durch häufige Impulse und Belastungen insbesondere bei einem Schmelzleiter oder dessen Befestigung mit Niedertemperaturlot altern, so dass auch ein Ansprechen entsprechend eines Verschleißzustandes der Triggerschaltung 2 und der Blitzschutz-Funkenstrecke 1 möglich ist.

Bei dem Ansprechen der Schmelzsicherung 4 erfolgt die Unterbrechung des Triggerstrompfades TS gegenüber der treibenden Spannung des Netzes. Wird der Schmelzsicherung 4 ein entsprechender Bypass mit dem Brückenzünder 7 direkt oder auch mit spannungsschaltenden Elementen 5 sowie ggf. Bauteilen, z.B. Widerständen, 6 zur Beeinflussung der Stromhöhe und damit der elektrischen Verzögerung der Auslösung parallel geschaltet, kann die Auslösung des Brückenzünders 7 und somit der triggerbaren Schmelzsicherungseinrichtung 8 verzögert nach dem Ansprechen der Schmelzsicherung 4 bewirkt werden.

Zu beachten bei dieser Art der Auslösung ist, dass bei einer Beeinflussung der Strombelastung des Hilfsdrahtes des Brückenzünders 7 und somit der Reaktionszeit direkt oder indirekt von den Netzbedingungen abhängt. Bei einem spannungsschaltendes Bauteil 9 im Triggerstrompfad TS kann der Stromfluss ggf. bei einem Stromnulldurchgang bereits vor am Ansprechen des Brückenzünders 7 unterbrochen werden, so dass die Schaltung erst bei einem erneuten Ansprechen des spannungsschaltenden Elementes 9 also bei einer folgenden Überspannung wirksam wird.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Die Ausführungsformen zeigen, dass neben der Aktivierung über den Hauptstrompfad und/oder den Triggerstrompfad eine Vielzahl an weiteren Möglichkeiten zur Aktivierung des Brückenzünders infolge einer Alterung durch Abbrand von beispielsweise hartgasabgebenden Materialien möglich sind. Selbstverständlich können auch andere Komponenten der Blitzschutz-Funkenstrecke, welche einem Abbrand, einer Deformation, Druckwirkung oder thermischen Belastung ausgesetzt sind in ähnlicher Weise zur Aktivierung der Schaltereinrichtung oder zur direkten Erzeugung eines Stromflusses durch den Brückenzünder genutzt werden.

Die Auslösung des Brückenzünders kann somit in Abhängigkeit von Impulsstrombelastungen bzw. auch einer Folgestrombelastung bei "fehlerhaften" Belastungswerten durch die Betätigung eines oder mehrerer Schaltereinrichtungen erfolgen.

Neben der unmittelbaren Bewertung des Stromes oder einer davon direkt abhängigen Größe können selbstverständlich zusätzlich auch weitere übliche Kriterien, wie Temperaturänderungen, Druckänderungen, Spannungsänderungen oder auch Kraftwirkungen zur Aktivierung des Brückenzünders genutzt werden.

Insbesondere die Indikatoreinrichtung ist nicht auf die beschriebenen Ausführungsformen beschränkt, sondern zur Erfüllung der definierten Funktionen variierbar. Auch ist die triggerbare Schmelzsicherungseinrichtung nicht auf eine durch einen Brückenzünder triggerbare Schmelzsicherungseinrichtung beschränkt.

Obwohl also die obigen Ausführungsformen Indikatoreinrichtungen in Form von mechanischen Schalteinrichtungen sind, können auch elektronische bzw. elektrische Schaltereinrichtungen und Komponenten vorgesehen werden, durch welche die genannten Funktionen realisierbar sind.

## Patentansprüche

1. Blitzschutz-Funkenstreckenanordnung, welche aufweist:
eine Blitzschutz-Funkenstrecke (1; 1'; 1"), welche einen ersten Hauptanschluss (1a) und einen zweiten Hauptanschluss (1b) aufweist;
wobei an den ersten Hauptanschluss (1a) eine erste Spannungsleitung (S1) eines Versorgungsnetzes und an den zweiten Hauptanschluss (1b) eine zweite Spannungsleitung des Versorgungsnetzes anschließbar ist;
eine triggerbare Schmelzsicherungseinrichtung (8), welche zwischen die erste oder zweite Spannungsleitung (S1, S2) und den entsprechenden Hauptanschluss (1, 1b) der Blitzschutz-Funkenstrecke (1; 1') anschließbar ist;
wobei im Betrieb zwischen der ersten Spannungsleitung (S1) und der zweiten Spannungsleitung (S2) mindestens ein über die Blitzschutz-Funkenstrecke (1; 1'; 1") führender Strompfad (TS; HS) ausbildbar ist;
eine Indikatoreinrichtung (I; I'; IE) zum Erfassen eines Stromverlaufs im Strompfad (TS; HS) oder eines entsprechenden Anteils des Stromverlaufs im Strompfad (TS; HS) und zum elektrisch oder mechanisch verzögerten Triggern der Schmelzsicherungseinrichtung (8), wenn der erfasste Stromverlauf im Strompfad (TS; HS) oder der entsprechende Anteil des Stromverlaufs im Strompfad (TS; HS) ein vorgegebenes Kriterium erfüllt;
wobei das Triggern der Schmelzsicherungseinrichtung (8) um eine vorgegebene Zeitspanne verzögert ist, welche derart gewählt ist, dass ein Impulsstrom im Wesentlichen abgeklungen ist, bevor die Schmelzsicherungseinrichtung (8) getriggert wird; und
wobei die Schmelzsicherungseinrichtung (8) einen Brückenzünder (7) aufweist, durch den sie triggerbar ist.

2. Blitzschutz-Funkenstreckenanordnung nach Anspruch 1, welche einen Triggeranschluss (1c) aufweist, wobei der mindestens eine Strompfad (TS; HS) ein Triggerstrompfad (TS) umfasst, der über den Triggeranschluss (1c) führt.

3. Blitzschutz-Funkenstreckenanordnung nach Anspruch 2, wobei die Indikatoreinrichtung (I; I') eine erste Indikatoreinrichtung (I) zum Erfassen eines Stromverlaufs im Triggerstrompfad (TS) oder eines entsprechenden Anteils des Stromverlaufs im Triggerstrompfad (TS) und zum mechanisch verzögerten Triggern der Schmelzsicherungseinrichtung (8) über eine mechanische Schaltereinrichtung (11), wenn der erfasste Stromverlauf im Triggerstrompfad (TS) oder der entsprechende Anteil des Stromverlaufs im Triggerstrompfad (TS) ein vorgegebenes erstes Kriterium erfüllt, umfasst.

4. Blitzschutz-Funkenstreckenanordnung nach Anspruch 1, 2 oder 3 wobei der mindestens eine Strompfad einen Hauptstrompfad (HS) umfasst, der über den ersten Hauptanschluss (1a) und den zweiten Hauptanschluss (1b) führt.

5. Blitzschutz-Funkenstreckenanordnung nach Anspruch 4, wobei die Indikatoreinrichtung (I; I') eine zweite Indikatoreinrichtung (I') zum Erfassen eines Stromverlaufs im Hauptstrompfad (HS) oder eines entsprechenden Anteils des Stromverlaufs im Hauptstrompfad (HS) und zum mechanisch verzögerten Triggern der Schmelzsicherungseinrichtung (8) über die mechanische Schaltereinrichtung (11), wenn der erfasste Stromverlauf im Hauptstrompfad (HS) oder der entsprechende Anteil des Stromverlaufs im Hauptstrompfad (HS) ein vorgegebenes zweites Kriterium erfüllt, umfasst.

6. Blitzschutz-Funkenstreckenanordnung nach einem der Ansprüche 1 bis 5, wobei die Indikatoreinrichtung (I; I') eine Indikatorsicherung (10) aufweist, durch welche ein mechanisches Stellglied (S) betätigbar ist, wobei die Schaltereinrichtung (11) durch das mechanische Stellglied (S) zum Triggern der Schmelzsicherungseinrichtung (8) schließbar ist.

7. Blitzschutz-Funkenstreckenanordnung nach Anspruch 6, wobei eine frequenzabhängige Stromweiche (4') parallel zur Indikatorsicherung (10) geschaltet ist.

8. Blitzschutz-Funkenstreckenanordnung nach Anspruch 6, wobei eine weitere Indikatorsicherung (4) parallel zur Indikatorsicherung (10) geschaltet ist.

9. Blitzschutz-Funkenstreckenanordnung nach einem der vorhergehenden Ansprüche, wobei die Stromhöhe und die Stromdauer des Stromverlaufs oder des entsprechenden Anteils des Stromverlaufs in das vorbestimmte Kriterium eingehen, insbesondere die Stromhöhe quadratisch und die Stromdauer linear in das vorgegebene Kriterium bzw. das erste und/oder zweite vorgegebene Kriterium eingehen.

10. Blitzschutz-Funkenstreckenanordnung nach Anspruch 1, wobei die vorgegebene Zeitspanne im Bereich 1 ms bis 5 ms liegt.

11. Blitzschutz-Funkenstreckenanordnung nach einem der vorhergehenden Ansprüche, wobei die Schaltereinrichtung (11) zum Triggern der Schmelzsicherungseinrichtung (8) durch eine Indikatoreinrichtung (I", I‴) für einen sekundären Parameter der Blitzschutz-Funkenstrecke (1; 1'), insbesondere Lichteigenschaften, z.B. Intensität oder spektrale Eigenschaften, des Lichtbogens, Temperatur, Druck oder Ausdehnung, schließbar ist.

12. Blitzschutz-Funkenstreckenanordnung nach einem der vorhergehenden Ansprüche, wobei die Blitzschutz-Funkenstrecke (1") mindestens einen hartgasabgebenden Bereich (38, 39) neben einem Lichtbogenbereich (41) aufweist, in dem eine Sondeneinrichtung (K1, K2, D; K0; K1, K2) als weitere Indikatoreinrichtung (IK; IK'; IK") vorgesehen ist, durch die ein Triggern der Schmelzsicherungseinrichtung (8) ermöglicht ist, wenn der hartgasabgebende Bereich (38, 39) derart degradiert ist, dass die Sondeneinrichtung (K1, K2, D; K0; K1, K2) vom Lichtbogen elektrisch kontaktierbar ist.

13. Blitzschutz-Funkenstreckenanordnung nach Anspruch 12, wobei die Sondeneinrichtung (K1, K2, D; K0; K1, K2) einen ersten Kontakt (K1) und einen zweiten Kontakt (K2), welcher vom ersten Kontakt (K1) beabstandet angeordnet ist, aufweist.

14. Blitzschutz-Funkenstreckenanordnung nach Anspruch 13, wobei zwischen dem ersten Kontakt (K1) und dem zweiten Kontakt (K2) ein Schmelzdraht (D) vorgesehen ist.

15. Blitzschutz-Funkenstreckenanordnung nach Anspruch 12, wobei die Sondeneinrichtung (K1, K2, D; K0; K1, K2) einen einzelnen Kontakt (K0) aufweist.

16. Blitzschutz-Funkenstreckenanordnung nach einem der Ansprüche 12 bis 15, wobei die Schmelzsicherungseinrichtung (8) derart mit der Sondeneinrichtung (K1, K2, D; K0; K1, K2) verschaltet ist, dass sie durch eine vom Lichtbogen an der Sondeneinrichtung (K1, K2, D; K0; K1, K2) abgegriffenen Spannung unmittelbar triggerbar ist.

17. Blitzschutz-Funkenstreckenanordnung nach Anspruch 2, wobei die Indikatoreinrichtung (IE) eine Indikatorsicherung (4) aufweist, durch die der Triggerstrompfad (TS) von einer der ersten oder zweiten Spannungsleitung (S1, S2) abkoppelbar ist und ein elektrisch verzögernder Bypass (5,6) von der anderen der ersten oder zweiten Spannungsleitung (S1, S2) über die triggerbare Schmelzsicherungseinrichtung (8) geschaltet ist, so dass die Schmelzsicherungseinrichtung (8) im abgekoppelten Zustand triggerbar ist.

18. Verfahren zum Betreiben einer Blitzschutz-Funkenstreckenanordnung, welche aufweist:
eine Blitzschutz-Funkenstrecke (1; 1'; 1"), welche einen ersten Hauptanschluss (1a) und einen zweiten Hauptanschluss (1b) aufweist;
wobei an den ersten Hauptanschluss (1a) eine erste Spannungsleitung (S1) eines Versorgungsnetzes und an den zweiten Hauptanschluss (1b) eine zweite Spannungsleitung des Versorgungsnetzes anschließbar ist;
eine durch einen Brückenzünder (7) triggerbare Schmelzsicherungseinrichtung (8), welche zwischen
die erste oder zweite Spannungsleitung (S1, S2) und den entsprechenden Hauptanschluss (1a, 1b) der Blitzschutz-Funkenstrecke (1; 1') anschließbar ist;
wobei im Betrieb zwischen der ersten Spannungsleitung (S1) und der zweiten Spannungsleitung (S2) mindestens ein über die Blitzschutz-Funkenstrecke (1; 1'; 1") führender Strompfad (TS; HS) ausbildbar ist;
wobei die Schmelzsicherungseinrichtung (8) einen Brückenzünder (7) aufweist, durch den sie triggerbar ist.
wobei das Verfahren die Schritte aufweist:
Erfassen eines Stromverlaufs im Strompfad (HS; TS) oder eines entsprechenden Anteils des Stromverlaufs im Strompfad (HS; TS) und zum elektrisch oder mechanisch verzögerten Triggern der Schmelzsicherungseinrichtung (8), wenn der erfasste Stromverlauf im Strompfad (HS; TS) oder der entsprechende Anteil des Stromverlaufs im Strompfad (HS; TS) ein vorgegebenes Kriterium erfüllt; und
Verzögern des Triggerns der Schmelzsicherungseinrichtung (8) um eine vorgegebene Zeitspanne, welche derart gewählt ist, dass ein Impulsstrom im Wesentlichen abgeklungen ist, bevor die Schmelzsicherungseinrichtung (8) getriggert wird.

19. Verfahren nach Anspruch 18, wobei die Blitzschutz-Funkenstrecke (1; 1'; 1") einen Triggeranschluss (1c) aufweist und wobei der mindestens eine Strompfad einen Triggerstrompfad (TS) umfasst, der über den Triggeranschluss (1c) führt.

20. Verfahren nach Anspruch 19, umfassend die Schritte: Erfassen eines Stromverlaufs im Triggerstrompfad oder eines entsprechenden Anteils des Stromverlaufs im Triggerstrompfad und zum mechanisch verzögerten Triggern der Schmelzsicherungseinrichtung (8) über die mechanische Schaltereinrichtung (11), wenn der erfasste Stromverlauf im Triggerstrompfad oder der entsprechende Anteil des Stromverlaufs im Triggerstrompfad ein vorgegebenes erstes Kriterium erfüllt.

21. Verfahren nach Anspruch 18, 19 oder 20, wobei der mindestens eine Strompfad einen Hauptstrompfad umfasst, der über den ersten Hauptanschluss (1a) und den zweiten Hauptanschluss (1b) führt.

22. Verfahren nach Anspruch 21, umfassend die Schritte: Erfassen eines Stromverlaufs im Hauptstrompfad oder eines entsprechenden Anteils des Stromverlaufs im Hauptstrompfad und zum mechanisch verzögerten Triggern der Schmelzsicherungseinrichtung (8) über die mechanische Schaltereinrichtung (11), wenn der erfasste Stromverlauf im Hauptstrompfad oder der entsprechende Anteil des Stromverlaufs im Hauptstrompfad ein vorgegebenes zweites Kriterium erfüllt.

23. Blitzschutz-Funkenstreckenanordnung, welche aufweist:
eine Blitzschutz-Funkenstrecke (1; 1'; 1"), welche einen ersten Hauptanschluss (1a) und einen zweiten Hauptanschluss (1b) aufweist;
wobei an den ersten Hauptanschluss (1a) eine erste Spannungsleitung (S1) eines Versorgungsnetzes und an den zweiten Hauptanschluss (1b) eine zweite Spannungsleitung des Versorgungsnetzes anschließbar ist;
eine triggerbare Schmelzsicherungseinrichtung (8), welche zwischen die erste oder zweite Spannungsleitung (S1, S2) und den entsprechenden Hauptanschluss (1, 1b) der Blitzschutz-Funkenstrecke (1; 1') anschließbar ist;
wobei im Betrieb zwischen der ersten Spannungsleitung (S1) und der zweiten Spannungsleitung (S2) mindestens ein über die Blitzschutz-Funkenstrecke (1; 1'; 1") führender Strompfad (TS; HS) ausbildbar ist;
wobei die Blitzschutz-Funkenstrecke (1") mindestens einen hartgasabgebenden Bereich (38, 39) neben einem Lichtbogenbereich (41) aufweist, in dem eine Sondeneinrichtung (K1, K2, D; K0; K1, K2) als Indikatoreinrichtung (IK; IK'; IK") vorgesehen ist, durch die ein Triggern der Schmelzsicherungseinrichtung (8) ermöglicht ist, wenn der hartgasabgebende Bereich (38, 39) derart degradiert ist, dass die Sondeneinrichtung (K1, K2, D; K0; K1, K2) vom Lichtbogen elektrisch kontaktierbar ist.

24. Blitzschutz-Funkenstreckenanordnung nach Anspruch 23, wobei die Sondeneinrichtung (K1, K2, D; K0; K1, K2) einen ersten Kontakt (K1) und einen zweiten Kontakt (K2), welcher vom ersten Kontakt (K1) beabstandet angeordnet ist, aufweist.

25. Blitzschutz-Funkenstreckenanordnung nach Anspruch 24, wobei zwischen dem ersten Kontakt (K1) und dem zweiten Kontakt (K2) ein Schmelzdraht (D) vorgesehen ist.

26. Blitzschutz-Funkenstreckenanordnung nach Anspruch 23, wobei die Sondeneinrichtung (K1, K2, D; K0; K1, K2) einen einzelnen Kontakt (K0) aufweist.

27. Blitzschutz-Funkenstreckenanordnung nach einem der Ansprüche 23 bis 26, wobei die Schmelzsicherungseinrichtung (8) derart mit der Sondeneinrichtung (K1, K2, D; K0; K1, K2) verschaltet ist, dass sie durch eine vom Lichtbogen an der Sondeneinrichtung (K1, K2, D; K0; K1, K2) abgegriffenen Spannung unmittelbar triggerbar ist.

## Claims

1. A lightning protection spark gap assembly, comprising:
a lightning protection spark gap (1; 1'; 1") comprising a first main connection (1a) and a second main connection (1b);
wherein a first voltage line (S1) of a supply network is configured to be connected to the first main connection (1a) and a second voltage line of the supply network is configured to be connected to the second main connection (1b);
a triggerable fusible link device (8) configured to be connected between the first or second voltage line (S1, S2) and the corresponding main connection (1, 1b) of the lightning protection spark gap (1; 1');
wherein during operation at least one current path (TS; HS) passing via the lightning protection spark gap (1; 1'; 1") is configured between the first voltage line (S1) and the second voltage line (S2);
an indicator device (I; I'; IE) for detecting a current profile in the current path (TS; HS) or a corresponding portion of the current profile in the current path (TS; HS) and for triggering the fusible link device (8) in an electrically or mechanically delayed manner when the detected current profile in the current path (TS; HS) or the corresponding portion of the current profile in the current path (TS; HS) meets a predetermined criterion;
wherein the triggering of the fusible link device (8) is delayed by a predefined period, which is selected in such a manner that a pulse current has substantially decayed before the fusible link device (8) is triggered; and
wherein the fusible link device (8) comprises a bridge igniter (7), by means of which it is triggerable.

2. The lightning protection spark gap assembly according to claim 1, comprising a trigger connection (1c), wherein the at least one current path (TS; HS) comprises a trigger current path (TS), which leads via the trigger connection (1c).

3. The lightning protection spark gap assembly according to claim 2, wherein the indicator device (I; I') comprises a first indicator device (I) for detecting a current profile in the trigger current path (TS) or a corresponding portion of the current profile in the trigger current path (TS) and for triggering the fusible link device (8) in a mechanically delayed manner via a mechanical switch device (11) when the detected current profile in the trigger current path (TS) or the corresponding portion of the current profile in the trigger current path (TS) meets a predefined first criterion.

4. The lightning protection spark gap assembly according to claim 1, 2 or 3, wherein the at least one current path comprises a main current path (HS), which leads via the first main connection (1a) and the second main connection (1b).

5. The lightning protection spark gap assembly according to claim 4, wherein the indicator device (I; I') comprises a second indicator device (I') for detecting a current profile in the main current path (HS) or a corresponding portion of the current profile in the main current path (HS) and for triggering the fusible link device (8) in a mechanically delayed manner via the mechanical switch device (11) when the detected current profile in the main current path (HS) or the corresponding portion of the current profile in the main current path (HS) meets a predefined second criterion.

6. The lightning protection spark gap assembly according to any one of claims 1 to 5, wherein the indicator device (I; I') comprises an indicator fuse (10), which is usable to actuate a mechanical actuator (S), wherein the switch device (11) is closeable by the mechanical actuator (S) in order to trigger the fusible link device (8).

7. The lightning protection spark gap assembly according to claim 6, wherein a frequency-dependent current divider (4') is connected in parallel with the indicator fuse (10).

8. The lightning protection spark gap assembly according to claim 6, wherein a further indicator fuse (4) is connected in parallel with the indicator fuse (10).

9. The lightning protection spark gap assembly according to any one of the preceding claims, wherein the current level and the current duration of the current profile or of the corresponding portion of the current profile are included in the predetermined criterion, in particular the current level is included quadratically and the current duration linearly in the predefined criterion or the first and/or second predefined criterion.

10. The lightning protection spark gap assembly according to claim 1, wherein the predefined period is in the range of 1 ms to 5 ms.

11. The lightning protection spark gap assembly according to one of the preceding claims, wherein the switch device (11) for triggering the fusible link device (8) is closeable by an indicator device (I", I"') for a secondary parameter of the lightning protection spark gap (1; 1'), in particular light properties of the arc, e.g. intensity or spectral properties, temperature, pressure or expansion.

12. The lightning protection spark gap assembly according to one of the preceding claims, wherein the lightning protection spark gap (1") comprises at least one hard gas emitting region (38, 39) next to an arc region (41), in which a probe device (K1, K2, D; K0; K1, K2) is provided as a further indicator device (IK; IK'; IK"), which enables triggering of the fusible link device (8) when the hard gas emitting region (38, 39) is degraded in such a manner that the arc is electrically contactable with the probe device (K1, K2, D; K0; K1, K2).

13. The lightning protection spark gap assembly according to claim 12, wherein the probe device (K1, K2, D; K0; K1, K2) comprises a first contact (K1) and a second contact (K2), which is arranged at a distance from the first contact (K1).

14. The lightning protection spark gap assembly according to claim 13, wherein a fusible wire (D) is provided between the first contact (K1) and the second contact (K2).

15. The lightning protection spark gap assembly according to claim 12, wherein the probe device (K1, K2, D; K0; K1, K2) comprises an individual contact (K0).

16. The lightning protection spark gap assembly according to any one of claims 12 to 15, wherein the fusible link device (8) is connected to the probe device (K1, K2, D; K0; K1, K2) in such a manner that it is directly triggerable by a voltage tapped off from the arc at the probe device (K1, K2, D; K0; K1, K2).

17. The lightning protection spark gap assembly according to claim 2, wherein the indicator device (IE) comprises an indicator fuse (4), by means of which the trigger current path (TS) is decouplable from one of the first or second voltage lines (S1, S2) and an electrically delaying bypass (5, 6) is connected from the other of the first or second voltage lines (S1, S2) via the triggerable fusible link device (8), so that the fusible link device (8) is triggerable in the decoupled state.

18. A method for operating a lightning protection spark gap assembly, comprising:
a lightning protection spark gap (1; 1'; 1") comprising a first main connection (1a) and a second main connection (1b);
wherein a first voltage line (S1) of a supply network is configured to be connected to the first main connection (1a) and a second voltage line of the supply network is configured to be connected to the second main connection (1b);
a fusible link device (8), which is triggerable by a bridge igniter (7) and is configured to be connected between the first or second voltage line (S1, S2) and the corresponding main connection (1a, 1b) of the lightning protection spark gap (1; 1');
wherein at least one current path (TS; HS) passing via the lightning protection spark gap (1; 1'; 1") is configured during operation between the first voltage line (S1) and the second voltage line (S2);
wherein the fusible link device (8) comprises a bridge igniter (7), by means of which it is triggerable.
wherein the method comprises the steps of:
detecting a current profile in the current path (HS; TS) or a corresponding portion of the current profile in the current path (HS; TS) and triggering the fusible link device (8) in an electrically or mechanically delayed manner when the detected current profile in the current path (HS; TS) or the corresponding portion of the current profile in the current path (HS; TS) meets a predefined criterion; and
delaying the triggering of the fusible link device (8) by a predefined period, which is selected in such a manner that a pulse current has substantially decayed before the fusible link device (8) is triggered.

19. The method according to claim 18, wherein the lightning protection spark gap (1; 1'; 1") comprises a trigger connection (1c) and wherein the at least one current path comprises a trigger current path (TS), which leads via the trigger connection (1c).

20. The method according to claim 19, comprising the steps of:
detecting a current profile in the trigger current path or a corresponding portion of the current profile in the trigger current path and triggering the fusible link device (8) in a mechanically delayed manner via the mechanical switch device (11) when the detected current profile in the trigger current path or the corresponding portion of the current profile in the trigger current path meets a predefined first criterion.

21. The method according to claim 18, 19 or 20, wherein the at least one current path comprises a main current path, which leads via the first main connection (1a) and the second main connection (1b).

22. The method according to claim 21, comprising the steps of: detecting a current profile in the main current path or a corresponding portion of the current profile in the main current path and triggering the fusible link device (8) in a mechanically delayed manner via the mechanical switch device (11) when the detected current profile in the main current path or the corresponding portion of the current profile in the main current path meets a predefined second criterion.

23. A lightning protection spark gap assembly, comprising:
a lightning protection spark gap (1; 1'; 1") comprising a first main connection (1a) and a second main connection (1b);
wherein a first voltage line (S1) of a supply network is configured to be connected to the first main connection (1a) and a second voltage line of the supply network is configured to be connected to the second main connection (1b);
a triggerable fusible link device (8), which is configured to be connected between the first or second voltage line (S1, S2) and the corresponding main connection (1, 1b) of the lightning protection spark gap (1; 1');
wherein at least one current path (TS; HS) passing via the lightning protection spark gap (1; 1'; 1") is configured during operation between the first voltage line (S1) and the second voltage line (S2);
wherein the lightning protection spark gap (1") comprises at least one hard gas emitting region (38, 39) next to an arc region (41), in which a probe device (K1, K2, D; K0; K1, K2) is provided as an indicator device (IK; IK'; IK"), which enables triggering of the fusible link device (8) when the hard gas emitting region (38, 39) is degraded in such a manner that the arc is electrically contactable with the probe device (K1, K2, D; K0; K1, K2).

24. The lightning protection spark gap assembly according to claim 23, wherein the probe device (K1, K2, D; K0; K1, K2) comprises a first contact (K1) and a second contact (K2), which is arranged at a distance from the first contact (K1).

25. The lightning protection spark gap assembly according to claim 24, wherein a fusible wire (D) is provided between the first contact (K1) and the second contact (K2).

26. The lightning protection spark gap assembly according to claim 23, wherein the probe device (K1, K2, D; K0; K1, K2) comprises an individual contact (K0).

27. The lightning protection spark gap assembly according to one of claims 23 to 26, wherein the fusible link device (8) is connected to the probe device (K1, K2, D; K0; K1, K2) in such a manner that it is directly triggerable by a voltage tapped off from the arc at the probe device (K1, K2, D; K0; K1, K2).

## Revendications

1. Agencement éclateur de protection contre la foudre, comprenant :
un éclateur de protection contre la foudre (1 ; 1' ; 1") comprenant une première connexion principale (1a) et une deuxième connexion principale (1b) ;
dans lequel une première ligne de tension (S1) d'un réseau d'alimentation est configurée de manière à pouvoir être raccordée à la première connexion principale (1a) et une deuxième ligne de tension du réseau d'alimentation configurée de manière à pouvoir être raccordée à la deuxième connexion principale (1b) ;
un dispositif fusible (8) déclenchable, configuré de manière à pouvoir être raccordé entre la première ou la deuxième ligne de tension (S1, S2) et la connexion principale correspondante (1, 1b) de l'éclateur de protection contre la foudre (1 ; 1') ;
dans lequel, en fonctionnement, au moins un trajet de courant (TS ; HS) passant par l'éclateur de protection contre la foudre (1 ; 1' ; 1") est configuré de manière à pouvoir être formé entre la première ligne de tension (S1) et la deuxième ligne de tension (S2) ;
un dispositif indicateur (I ; I' ; IE) destiné à détecter un profil de courant dans le trajet de courant (TS ; HS) ou une partie correspondante du profil de courant dans le trajet de courant (TS ; HS) et à déclencher le dispositif fusible (8) avec un retard électrique ou mécanique lorsque le profil de courant détecté dans le trajet de courant (TS ; HS) ou lorsque la partie correspondante du profil de courant dans le trajet de courant (TS ; HS) répond à un critère prédéterminé ;
dans lequel le déclenchement du dispositif fusible (8) est retardé d'un laps de temps prédéterminé qui est choisi de telle sorte qu'un courant d'impulsion a sensiblement diminué avant que le dispositif fusible (8) ne soit déclenché ; et
dans lequel le dispositif fusible (8) comprend une amorce à pont (7) par laquelle il est déclenchable.

2. Agencement éclateur de protection contre la foudre selon la revendication 1, comprenant une borne de déclenchement (1c), dans lequel l'au moins un trajet de courant (TS ; HS) comprend un trajet de courant de déclenchement (TS) qui passe par la borne de déclenchement (1c).

3. Agencement éclateur de protection contre la foudre selon la revendication 2, dans lequel le dispositif indicateur (I ; I') comprend un premier dispositif indicateur (I) destiné à détecter un profil de courant dans le trajet de courant de déclenchement (TS) ou une partie correspondante du profil de courant dans le trajet de courant de déclenchement (TS) et à déclencher le dispositif fusible (8) avec un retard mécanique par l'intermédiaire d'un dispositif de commutation mécanique (11) lorsque le profil de courant détecté dans le trajet de courant de déclenchement (TS) ou lorsque la partie correspondante du profil de courant dans le trajet de courant de déclenchement (TS) répond à un premier critère prédéterminé.

4. Agencement éclateur de protection contre la foudre selon la revendication 1, 2 ou 3, dans lequel l'au moins un trajet de courant comprend un trajet de courant principal (HS) qui passe par la première borne principale (1a) et la deuxième borne principale (1b).

5. Agencement éclateur de protection contre la foudre selon la revendication 4, dans lequel le dispositif indicateur (I ; I') comprend un deuxième dispositif indicateur (I') destiné à détecter un profil de courant dans le trajet de courant principal (HS) ou une partie correspondante du profil de courant dans le trajet de courant principal (HS) et à déclencher le dispositif fusible (8) avec un retard mécanique par l'intermédiaire du dispositif de commutation mécanique (11) lorsque le profil de courant détecté dans le trajet de courant principal (HS) ou lorsque la partie correspondante du profil de courant dans le trajet de courant principal (HS) répond à un deuxième critère prédéterminé.

6. Agencement éclateur de protection contre la foudre selon l'une des revendications 1 à 5, dans lequel le dispositif indicateur (I ; I') présente un fusible indicateur (10) par lequel un actionneur mécanique (S) est actionnable, dans lequel le dispositif de commutation (11) est configuré de manière à pouvoir être fermé par l'actionneur mécanique (S) afin de déclencher le dispositif fusible (8).

7. Agencement éclateur de protection contre la foudre selon la revendication 6, dans lequel un commutateur de courant dépendant de la fréquence (4') est connecté en parallèle du fusible indicateur (10).

8. Agencement éclateur de protection contre la foudre selon la revendication 6, dans lequel un autre fusible indicateur (4) est connecté en parallèle du fusible indicateur (10).

9. Agencement éclateur de protection contre la foudre selon l'une des revendications précédentes, dans lequel le niveau de courant et la durée de courant du profil de courant ou de la partie correspondante du profil de courant correspondent au critère prédéterminé, en particulier le niveau de courant quadratique et la durée de courant correspondent linéairement au critère prédéterminé ou au premier et/ou au deuxième critère prédéterminé.

10. Agencement éclateur de protection contre la foudre selon la revendication 1, dans lequel le laps de temps prédéterminé est compris entre 1 ms et 5 ms.

11. Agencement éclateur de protection contre la foudre selon l'une des revendications précédentes, dans lequel le dispositif de commutation (11) est configuré de manière à pouvoir être fermé pour déclencher le dispositif fusible (8) par un dispositif indicateur (I", I"') selon un paramètre secondaire de l'éclateur de protection contre la foudre (1 ; 1'), en particulier des propriétés lumineuses, par exemple l'intensité ou des propriétés spectrales, de l'arc électrique, la température, la pression ou la dilatation.

12. Agencement éclateur de protection contre la foudre selon l'une des revendications précédentes, dans lequel l'éclateur de protection contre la foudre (1") présente au moins une zone d'émission de gaz dur (38, 39) à côté d'une zone d'arc électrique (41) dans laquelle un dispositif de sonde (K1, K2, D ; K0 ; K1, K2) est prévu en tant que dispositif indicateur supplémentaire (IK ; IK' ; IK") par lequel un déclenchement du dispositif fusible (8) est rendu possible lorsque la zone d'émission de gaz dur (38, 39) est dégradée de telle sorte que l'arc puisse être en contact électrique avec le dispositif de sonde (K1, K2, D ; K0 ; K1, K2).

13. Agencement éclateur de protection contre la foudre selon la revendication 12, dans lequel le dispositif de sonde (K1, K2, D ; K0 ; K1, K2) présente un premier contact (K1) et un deuxième contact (K2) qui est disposé à distance du premier contact (K1).

14. Agencement éclateur de protection contre la foudre selon la revendication 13, dans lequel un fil fusible (D) est prévu entre le premier contact (K1) et le deuxième contact (K2).

15. Agencement éclateur de protection contre la foudre selon la revendication 12, dans lequel le dispositif de sonde (K1, K2, D ; K0 ; K1, K2) présente un contact individuel (K0).

16. Agencement éclateur de protection contre la foudre selon l'une des revendications 12 à 15, dans lequel le dispositif fusible (8) est connecté au dispositif de sonde (K1, K2, D ; K0 ; K1, K2) de telle sorte qu'il est directement déclenchable par une tension prélevée par l'arc électrique au niveau du dispositif de sonde (K1, K2, D ; K0 ; K1, K2).

17. Agencement éclateur de protection contre la foudre selon la revendication 2, dans lequel le dispositif indicateur (IE) présente un fusible indicateur (4) par lequel le trajet de courant de déclenchement (TS) est configuré de manière à pouvoir être découplé de l'une des première ou deuxième lignes de tension (S1, S2) et par lequel une dérivation à retard électrique (5, 6) est connectée à l'autre des première ou deuxième lignes de tension (S1, S2) par l'intermédiaire du dispositif fusible déclenchable (8), de sorte que le dispositif fusible (8) est déclenchable à l'état découplé.

18. Procédé de mise en service d'un agencement éclateur de protection contre la foudre, comprenant :
un éclateur de protection contre la foudre (1 ; 1' ; 1") comprenant une première connexion principale (1a) et une deuxième connexion principale (1b) ;
dans lequel une première ligne de tension (S1) d'un réseau d'alimentation est configurée de manière à pouvoir être raccordée à la première connexion principale (1a) et une deuxième ligne de tension du réseau d'alimentation configurée de manière à pouvoir être raccordée à la deuxième connexion principale (1b) ;
un dispositif fusible (8) déclenchable par une amorce à pont (7), configuré de manière à pouvoir être raccordé entre la première ou la deuxième ligne de tension (S1, S2) et la connexion principale correspondante (1a, 1b) de l'éclateur de protection contre la foudre (1 ; 1') ;
dans lequel, en fonctionnement, au moins un trajet de courant (TS ; HS) passant par l'éclateur de protection contre la foudre (1 ; 1' ; 1") est configuré de manière à pouvoir être formé entre la première ligne de tension (S1) et la deuxième ligne de tension (S2) ;
dans lequel le dispositif fusible (8) comprend une amorce à pont (7) par laquelle il est déclenchable ;
dans lequel le procédé comprend les étapes consistant à :
détecter un profil de courant dans le trajet de courant (HS ; TS) ou une partie correspondante du profil de courant dans le trajet de courant (HS ; TS) et à déclencher le dispositif fusible (8) avec un retard électrique ou mécanique lorsque le profil de courant détecté dans le trajet de courant (HS ; TS) ou lorsque la partie correspondante du profil de courant dans le trajet de courant (HS ; TS) répond à un critère prédéterminé ; et
retarder le déclenchement du dispositif fusible (8) d'un laps de temps prédéterminé qui est choisi de telle sorte qu'un courant d'impulsion a sensiblement diminué avant que le dispositif fusible (8) ne soit déclenché.

19. Procédé selon la revendication 18, dans lequel l'éclateur de protection contre la foudre (1 ; 1' ; 1") comprend une borne de déclenchement (1c) et dans lequel l'au moins un trajet de courant comprend un trajet de courant de déclenchement (TS) qui passe par la borne de déclenchement (1c).

20. Procédé selon la revendication 19, comprenant les étapes consistant à :
détecter un profil de courant dans le trajet de courant de déclenchement ou une partie correspondante du profil de courant dans le trajet de courant de déclenchement et à déclencher le dispositif fusible (8) avec un retard mécanique par l'intermédiaire du dispositif de commutation mécanique (11) lorsque le profil de courant détecté dans le trajet de courant de déclenchement ou lorsque la partie correspondante du profil de courant dans le trajet de courant de déclenchement répond à un premier critère prédéterminé.

21. Procédé selon la revendication 18, 19 ou 20, dans lequel l'au moins un trajet de courant comprend un trajet de courant principal qui passe par la première connexion principale (1a) et la deuxième connexion principale (1b).

22. Procédé selon la revendication 21, comprenant les étapes consistant à : détecter un profil de courant dans le trajet de courant principal ou une partie correspondante du profil de courant dans le trajet de courant principal et à déclencher le dispositif fusible (8) avec un retard mécanique par l'intermédiaire du dispositif de commutation mécanique (11) lorsque le profil de courant détecté dans le trajet de courant principal ou lorsque la partie correspondante du profil de courant dans le trajet de courant principal répond à un deuxième critère prédéterminé.

23. Agencement éclateur de protection contre la foudre, comprenant :
un éclateur de protection contre la foudre (1 ; 1' ; 1") comprenant une première connexion principale (1a) et une deuxième connexion principale (1b) ;
dans lequel une première ligne de tension (S1) d'un réseau d'alimentation est configurée de manière à pouvoir être raccordée à la première connexion principale (1a) et une deuxième ligne de tension du réseau d'alimentation configurée de manière à pouvoir être raccordée à la deuxième connexion principale (1b) ;
un dispositif fusible (8) déclenchable, configuré de manière à pouvoir être raccordé entre la première ou la deuxième ligne de tension (S1, S2) et la connexion principale correspondante (1, 1b) de l'éclateur de protection contre la foudre (1 ; 1') ;
dans lequel, en fonctionnement, au moins un trajet de courant (TS ; HS) passant par l'éclateur de protection contre la foudre (1 ; 1' ; 1") est configuré de manière à pouvoir être formé entre la première ligne de tension (S1) et la deuxième ligne de tension (S2) ;
dans lequel l'éclateur de protection contre la foudre (1") présente au moins une zone d'émission de gaz dur (38, 39) à côté d'une zone d'arc électrique (41) dans laquelle un dispositif de sonde (K1, K2, D ; K0 ; K1, K2) est prévu en tant que dispositif indicateur (IK ; IK' ; IK") par lequel un déclenchement du dispositif fusible (8) est rendu possible lorsque la zone d'émission de gaz dur (38, 39) est dégradée de telle sorte que l'arc puisse être en contact électrique avec le dispositif de sonde (K1, K2, D ; K0 ; K1, K2).

24. Agencement éclateur de protection contre la foudre selon la revendication 23, dans lequel le dispositif de sonde (K1, K2, D ; K0 ; K1, K2) présente un premier contact (K1) et un deuxième contact (K2) qui est disposé à distance du premier contact (K1).

25. Agencement éclateur de protection contre la foudre selon la revendication 24, dans lequel un fil fusible (D) est prévu entre le premier contact (K1) et le deuxième contact (K2).

26. Agencement éclateur de protection contre la foudre selon la revendication 23, dans lequel le dispositif de sonde (K1, K2, D ; K0 ; K1, K2) présente un contact individuel (K0).

27. Agencement éclateur de protection contre la foudre selon l'une des revendications 23 à 26, dans lequel le dispositif fusible (8) est connecté au dispositif de sonde (K1, K2, D ; K0 ; K1, K2) de telle sorte qu'il est directement déclenchable par une tension prélevée par l'arc électrique au niveau du dispositif de sonde (K1, K2, D ; K0 ; K1, K2).
